# EUROPÄISCHE PATENTSCHRIFT

(11) **EP 2 113 012 B1**
(45) Veröffentlichungstag und Bekanntmachung des Hinweises auf die Patenterteilung: **29.08.2012**
(21) Anmeldenummer: 08716906.6
(22) Anmeldetag: 18.02.2008
(51) Int. Cl.: C09B 67/00

(54) **VERFAHREN ZUR HERSTELLUNG VON PIGMENT ROT 149**
METHOD FOR PRODUCING THE PIGMENT RED 149
PROCEDE DE PRODUCTION DE PIGMENT ROUGE 149

(30) Priorität: 19.02.2007 EP 07102654
(43) Veröffentlichungstag der Anmeldung: 04.11.2009
(73) Patentinhaber: BASF SE, 67056 Ludwigshafen (DE)
(72) Erfinder: KOWARSCH, Heinrich, 75038 Oberderdingen (DE); HETZENEGGER, Josef, 67134 Birkenheide (DE); STOHR, Andreas, 67251 Freinsheim (DE); USCHMANN, Hans-Joachim, 68723 Schwetzingen (DE)
(86) Internationale Anmeldenummer: PCT/EP2008/051932
(87) Internationale Veröffentlichungsnummer: WO 2008/101895

(56) Entgegenhaltungen:
- EP-A- 0 198 369
- EP-A- 0 657 436
- EP-A- 1 130 065
- EP-A- 1 188 800
- EP-A- 1 528 084
- DE-A1-102005 033 580
- DATABASE WPI Week 200204 Thomson Scientific, London, GB; AN 2002-027043 XP002533573 & CN 1 310 203 A (UNIV SOUTH CHINA SCI & ENG) 29. August 2001 (2001-08-29) in der Anmeldung erwähnt
- DATABASE WPI Week 198242 Thomson Scientific, London, GB; AN 1982-89635E XP002533574 & JP 57 149358 A (DAINIPPON INK & CHEM KK) 14. September 1982 (1982-09-14)

## Beschreibung

Die Erfindung betrifft ein Verfahren zur Herstellung von N,N'-Di(3',5'-dimethylphenyl)perylenbis(dicarboximid) (= C.I. Pigment Rot 149) in der alpha-Form.

Es ist bekannt, Farbmittel der Perylen-3,4,9,10-tetracarbonsäurediimid-Reihe durch Umsetzung von Perylen-3,4,9,10-tetracarbonsäuredianhydrid mit primären Arylaminen herzustellen.

Pigment Rot 149 weist die nachstehende Formel auf:

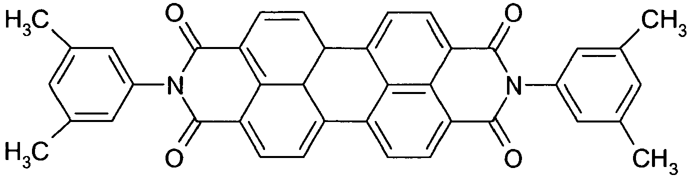

Das O-Halbkondensat weist folgende Formel auf:

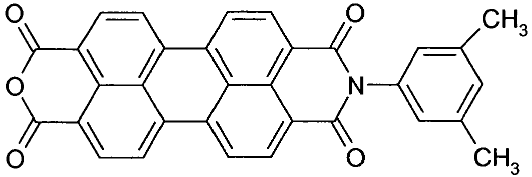

DE-A 1 807 729 offenbart die Umsetzung von Perylentetracarbonsäure oder von deren Anhydrid mit 3,5-Dichloranilin in Gegenwart von die Kondensation beschleunigenden Mitteln, wie Zinkchlorid, Zinkacetat oder Salzsäure, in Lösungs- oder Verdünnungsmitteln wie Chinolin, Chinaldin, Naphthalin oder Trichlorbenzol. Aus dem Reaktionsgemisch wird der Farbstoff durch Filtration, gegebenenfalls nach Verdünnen des Reaktionsgemischs mit inerten Lösungsmitteln wie Alkoholen, Formamid, Dimethylformamid, Toluol, Chlorbenzol oder Nitrobenzol, und anschließendem Waschen mit organischen Lösungsmitteln und Wasser isoliert. Zur Entfernung noch vorhandener Spuren von Perylentetracarbonsäure wird der Farbstoff mit verdünnter Natronlauge ausgekocht. Anschließend wird der Farbstoff durch Auflösen in konzentrierter Schwefelsäure und Ausfällen durch Verdünnen mit Wasser in eine für die Verwendung als Pigment geeignete Kristallform überführt.

DE-A 2 210 170 offenbart ein entsprechendes Verfahren, bei dem Perylen-3,4,9,10-tetracarbonsäure mit 2,4,6-Trimethylanilin umgesetzt wird.

Die Verwendung saurer Kondensationshilfsmittel bringt jedoch Nachteile wie Korrosionsprobleme und Verluste bei den zum Teil teuren Aminkomponenten durch Nebenreaktionen mit sich.

EP-A 0 198 369 offenbart ein Verfahren zur Herstellung von Perylen-3,4,9,10-tetracarbonsäurearylimiden, bei dem Perylen-3,4,9,10-tetracarbonsäuredianhydrid (Perylenbisanhydrid) mit einem primären Arylamin in Gegenwart eines Dialkylamins als Katalysator umgesetzt wird. Die Reaktion kann unter Zusatz von inerten Verdünnungsmitteln, wie Dimethylformamid, N-Methylpyrrolidon, o-Dichlorbenzol, Nitrobenzol, Chinolin oder 2-Ethylhexanol erfolgen. Bevorzugt wird die Reaktion jedoch ohne Zusatz weiterer Verdünnungsmittel in dem betreffenden Gemisch aus Arylamin und Dialkylamin durchgeführt. Die Abtrennung des Reaktionsproduktes kann, gegebenenfalls nach Verdünnen mit einem niedrigsiedenden Alkohol, durch Filtration erfolgen. Bevorzugt wird jedoch das Gemisch aus überschüssigem Arylamin und Dialkylamin und gegebenenfalls dem inerten Verdünnungsmittel nach quantitativer Umsetzung destillativ abgetrennt, so dass das Reaktionsprodukt als trockener Rückstand verbleibt.

CN-A 1310203 offenbart ein Verfahren zur Herstellung von Perylentetracarbonsäurediimid-Pigmenten, bei dem Perylenbisanhydrid und ein primäres Amin in wässriger Lösung bei einem pH-Wert von 3 bis 5 in Gegenwart einer organischen Carbonsäure mit 1 bis 5 C-Atomen umgesetzt wird. Das Rohpigment wird anschließend einer Nachbehandlung (Finishing) unterzogen. Hierzu wird das Rohpigment in einer Kugelmühle in Gegenwart eines Mahlhilfsmittels wie Natriumchlorid, Natriumsulfat und Natriumcarbonat, eines organischen Lösungsmittels und 1 bis 5 Gew.-%, bezogen auf das Gewicht des Rohpigments, eines Perylentetracarbonsäurediimid-Derivats gemahlen. Anschließend wird ein sog. post-finishing in einem wässrigen Medium in Gegenwart eines Tensids durchgeführt.

In den Beispielen wird Perylenbisanhydrid in 10 %iger KOH-Lösung aufgelöst, zu der Lösung werden 3,5-Dimethylanilin und Essigsäure zugegeben. Das Reaktionsprodukt wird abfiltriert und mit Wasser neutral gewaschen. Das getrocknete Rohpigment wird anschließend in einer Kugelmühle mit Natriumchlorid, einer geringen Menge N,N'-Di-n-butylperylenbis(dicarboximid) und einem Xylol/Ethylacetat-Gemisch vermahlen. Das Gemisch wird schließlich in eine 2 gew.-%ige wässrige Salzsäure, welche 1 % eines Tensidgemischs enthält, überführt, gekocht, das Pigment abfiltriert, mit Wasser neutral gewaschen, getrocknet und zerkleinert.

Nachteilig an dem in der CN-A 1310203 beschriebenen Verfahren ist, dass das Perylenbisanhydrid zunächst vollständig in wässriger Kalilauge gelöst und anschließend wieder mit Essigsäure feinteilig ausgefällt werden muss. Dabei werden erhebliche Mengen an Essigsäure verbraucht, die nicht wiedergewonnen werden können. Weiterhin geht ein Teil des teuren 3,5-Dimethylanilins durch Acylierung verloren. Der erhaltene Farbstoff entspricht nicht den Qualitätsanforderungen und muss in mehreren Finishing-Operationen aufwendig nachbehandelt werden.

Aufgabe der Erfindung ist es, ein einfach durchzuführendes Verfahren zur Herstellung von Pigment Rot 149 bereitzustellen, bei dem die oben beschriebenen Nachteile vermieden werden.

Gelöst wird die Aufgabe durch ein Verfahren zur Herstellung von N,N'-Di(3',5'-dimethylphenyl)perylenbis(dicarboximid) durch Umsetzung von Perylen-3,4,9,10-tetracarbonsäuredianhydrid (Perylenbisanhydrid) mit 3,5-Dimethylanilin in Gegenwart eines sekundären oder tertiären Amins als Katalysator, dadurch gekennzeichnet, dass die Umsetzung in einem wässrigen Reaktionsmedium und in Gegenwart von zugesetzten Impfkristallen des N,N'-Di(3',5'-dimethylphenyl)perylenbis(dicarboximid) durchgeführt wird bei einer Temperatur von 120 bis 190°C und einem Druck von 2 bis 13 bar. Insbesondere enthält das wässrige Reaktionsmedium überhaupt keine weiteren organischen Lösungsmittel. Gewisse Mengen an inerten, mit Wasser mischbaren organischen Lösungsmitteln, beispielsweise bis zu 10 Gew.-%, können jedoch enthalten sein. Ebenso können optional oberflächenaktive Mittel, z.B. die Ethoxylierungsprodukte längerkettiger Alkohole oder die Ethoxylierungsprodukte von Alkylphenolen, zugegeben werden.

Bevorzugt wird die Umsetzung in einem rein wässrigen Reaktionsmedium, welches im Wesentlichen keine weiteren organischen Lösungsmittel enthält, durchgeführt.

Die Umsetzung wird in Gegenwart eines sekundären oder tertiären Amins als Katalysator durchgeführt. Geeignete Katalysatoren sind aliphatische, cycloaliphatische, arylaliphatische oder heterocyclische sekundäre oder tertiäre Amine. Im Allgemeinen weisen geeignete sekundäre Amine die Formel R'R"NH auf, worin R', R" gleich oder verschieden sein können und geradkettiges oder verzweigtes Alkyl oder Cycloalkyl mit 1 bis 6 C-Atomen, welches durch Hydroxy-, Alkoxy-, Alkyl-, Alkylamino- oder Arylgruppen substituiert sein kann, bedeuten oder worin R' und R" gemeinsam mit dem Stickstoffatom einen 5- oder 6-gliedrigen heterocyclischen Ring, der gegebenenfalls (im Falle von tertiären Aminen) durch Alkyl-, Aralkyl- oder Arylgruppen substituiert sein kann, bilden. Geignete tertiäre Amine weisen im Allgemeinen 3 der genannten Reste auf. Bevorzugte sekundäre oder tertiäre Amine sind Piperazin, N-(2-hydroxyethyl)piperazin, Diethanolamin, N,N'-Dimethylpiperazin, N-Ethylpiperazin, N-Methylcyclohexylamin, Imidazol und N-Methyimidazol.

Die Umsetzung wird in Gegenwart von Impfkristallen des C.I. Pigment Rot 149 durchgeführt. Die Menge an zugegebenen Impfkristallen beträgt, bezogen auf das Reaktionsprodukt, 1 bis 25 Gew.-%, bevorzugt 5 bis 10 Gew.-%. Die zugesetzten Impfkristalle können aus einer der vorausgegangenen Chargen stammen.

Die Umsetzung wird bei einer Temperatur von 120 bis 190 °C und einem Druck von 2 bis 13 bar durchgeführt. Die Reaktionszeit beträgt im Allgemeinen 5 bis 40 Stunden. Das Molverhältnis 3,5-Dimethylanilin zu Perylenbisanhydrid beträgt im Allgemeinen 1,8 : 1 bis 4:1, bevorzugt 2:1 bis 3: 1. Das Molverhältnis sekundäres oder tertiäres Amin zu Perylenbisanhydrid beträgt im Allgemeinen 0,5:1 bis 2:1, bevorzugt 0,8:1 bis 1,4:1. Überschüssiges 3,5-Dimethylanilin kann nach Beendigung der Umsetzung abdestilliert werden. Das Reaktionsprodukt C.I. Pigment Rot 149 wird im Allgemeinen durch Filtration gewonnen. Die Mutterlauge, welche das sekundäre oder tertiäre Amin enthält, kann anschließend als Reaktionsmedium zur Synthese von weiterem Pigment Rot 149 wiederverwendet werden.

Falls gewünscht, können bei dem beschriebenen Herstellungsverfahren bis zu 10 Gew.-%, bevorzugt bis zu 5 Gew.-%, beispielsweise 0,5 bis 5 Gew.-% des 3,5-Xylidins durch ein anderes primäres Amine ersetzt werden, um Pigmente mit modifizierten Eigenschaften zu erhalten. Geeignete weitere primäre Amine sind beispielsweise 4-Methoxyanilin und 4-Ethoxyanilin.

Mit dem erfindungsgemäßen Verfahren wird Pigment Rot 149 in der alpha-Modifikation erhalten. Im Allgemeinen enthält es weniger als 5 Gew.-%, bevorzugt weniger als 1,5 Gew.-% des Monoimids.

Bei der Filtration fällt das Produkt vorzugsweise in Form eines 30-50 gew.-%igen Pressgutes an.

Das grobkristalline Pigment wird im Allgemeinen vor seiner Anwendung in Lacken und Kunststoffen zunächst mit Hilfe von üblichen Feinverteilungs- und Finishverfahren in eine geeignete Teilchengröße überführt. Im Allgemeinen ist hierfür eine Trocken- oder Nassmahlung ausreichen, gegebenenfalls mit anschließender kontrollierter Rekristallisation aus Lösungsmitteln, beispielsweise Wasser oder wässrig-organischen Lösungsmittelgemischen. Hierdurch wird das Pigment Rot 149 in Teilchen mit einer Teilchengröße von im Allgemeinen < 0,2 µm überführt.

Das Pigment ergibt bei der Einfärbung von makromolekularem Material, z.B. PVC, LDund HDPE, Polypropylen oder Polyamid farbstarke Rottöne mit hoher Farbtonreinheit und guter Temperaturstabilität.

Die Erfindung wird durch die nachstehenden Beispiele näher erläutert.

### Beispiele

### Beispiel 1

In einem Autoklaven werden 423 g Perylenbisanhydrid als 50 gew.-%iger wasserfeuchter Presskuchen, entsprechend 0,54 Mol, 940 g Wasser, 44 g Piperazin, entsprechend 0,51 mol und 18 g Pigment Rot 149 als Impfkristalle vorgelegt und gut verrührt. Nach Zugabe von 156 g 3,5-Dimethylanilin, entsprechend 1,29 mol, wird der Ansatz auf 145 °C aufgeheizt und 15 Stunden lang bei dieser Temperatur gerührt. Der Autoklav wird anschließend entspannt und das überschüssige Xylidin wird vollständig abdestilliert.

Der Ansatz wird filtriert und farblos gewaschen. Die Ausbeute an Pigment Rot 149 beträgt 311 g, entsprechend 96,4 % der Theorie.

Das so erhaltene Rohprodukt enthält 97,5 Gew.-% des Perylendiimids und 1,4 Gew.-% des Monoimids (O-Halbkondensat). Das Produkt liegt in der alpha-Modifikation vor.

30 g Pigment, 60 g (90 g) Kochsalz und 750 g Stahlkugeln werden in einer Kugelmühle 20 h bei 80 °C gemahlen. Anschließend wird das Mahlgut in Wasser in Gegenwart von 2 g Salzsäure ausgerührt und salzfrei gewaschen, getrocknet und gemahlen.

Das erhaltene Pigment ist bei der Einarbeitung in LDPE (Low Density Polyethylene) gemäß DIN EN 139900-3 sehr farbstark und liefert Färbungen mit hoher Farbtonreinheit mit guter Temperaturstabilität.

### Vergleichsbeispiel

Ohne Zugabe von Impfkristallen wird ein farbschwaches, trübes Pigment Rot 149 erhalten, welches noch 5 % an O-Halbkondensat aufweist. Ferner enthält es Anteile der unerwünschten beta- und gamma-Modifikation.

**Tabelle: Koloristik in LDPE - Weißaufhellung**

| | Farbstärke in % | Farbton dH* | Chroma dC* |
|---|---|---|---|
| Beispiel 1 | 100 | 0 | 0 |
| Vergleichsbeispiel | 82 | 0,7 | -1,7 |

| | | | |
|---|---|---|---|
| *dH bzw. dC = Farbtondifferenz bzw. Chromadifferenz zwischen Vergleichsbeispiel und Beispiel nach Farbstärkeangleich gemäß DIN 6174 | | | |

### Beispiel 2

Es wird wie in Beispiel 1 verfahren, jedoch werden 66 g N-(2-hydroxyethyl)piperazin, entsprechend 0,51 mol, als sekundäres Amin eingesetzt. Die Ausbeute an Rohprodukt beträgt 304 g, entsprechend 94,2 % der Theorie.

### Beispiel 3

Es wird wie in Beispiel 1 verfahren, jedoch werden 100 Gewichtsteile 80 %iges Diethanolamin, entsprechend 0,76 mol, als sekundäres Amin eingesetzt. Die Ausbeute an Rohprodukt liegt bei 313 g, entsprechend 97,0 % der Theorie.

## Patentansprüche

1. Verfahren zur Herstellung von N,N'-Di(3',5'-dimethylphenyl)perylenbis(dicarboximid) in der alpha-Form durch Umsetzung von Perylen-3,4,9,10-tetracarbonsäuredianhydrid mit 3,5-Dimethylanilin in Gegenwart eines sekundären oder tertiären Amins als Katalysator, **dadurch gekennzeichnet, dass** die Umsetzung in einem wässrigem Reaktionsmedium und in Gegenwart von zugesetzten Impfkristallen von N,N'-Di(3',5'-dimethyl-phenyl)perylenbis(dicarboximid) bei einer Temperatur von 120 bis 190 °C und einem Druck von 2 bis 13 bar durchgeführt wird.

2. Verfahren nach Anspruch 1, **dadurch gekennzeichnet, dass** das wässrige Reaktionsmedium im Wesentlichen keine weiteren organischen Lösungsmittel enthält.

3. Verfahren nach Anspruch 1 oder 2, **dadurch gekennzeichnet, dass** das sekundäre oder tertiäre Amin ausgewählt ist aus der Gruppe bestehend aus Piperazin, N-(2-hydroxyethyl)piperazin, Diethanolamin, N,N'-Dimethyl-Piperazin, N-Ethylpiperazin, N-Methylcyclohexylamin, Imidazol und N-Methyimidazol.

4. Verfahren nach einem der Ansprüche 1 bis 3, **dadurch gekennzeichnet, dass** die zugesetzten Impfkristalle aus einer der vorausgegangenen Chargen stammen.

5. Verfahren nach einem der Ansprüche 1 bis 4, **dadurch gekennzeichnet, dass** das nach Abfiltrieren des Reaktionsproduktes verbleibende wässrige Reaktionsmedium bei der Herstellung einer nachfolgenden Charge wieder verwendet wird.

6. Verfahren nach einem der Ansprüche 1 bis 5, **dadurch gekennzeichnet, dass** die Umsetzung bei einer Temperatur im Bereich von 130 bis 170 ° C durchgeführt wird

7. Verfahren nach einem der Ansprüche 1 bis 6, **dadurch gekennzeichnet, dass** pro Mol Perylen-3,4,9,10-dicarbonsäuredianhydrid 0.5 bis 2.0 Mol eines sekundären oder tertiären Amins eingesetzt werden

8. Verfahren nach einem der Ansprüche 1 bis 7, **dadurch gekennzeichnet, dass** 0 bis 10 Gew.-% des 3,5-Xylidins durch ein oder mehrere andere primäre Amine ersetzt werden.

9. Verfahren nach einem der Ansprüche 1 bis 8, **dadurch gekennzeichnet, dass** durch Trocken- und/oder Nassmahlung, gegebenenfalls mit anschließender Rekristallisation aus einem Lösungsmittel, das N,N'-Di(3',5'-dimethylphenyl)perylenbis(dicarboximid) in Teilchen mit einer durchschnittlichen Teilchengröße < 0,2 µm überführt wird.

## Claims

1. A process for preparing N,N'-di(3',5'-dimethylphenyl)perylenebis(dicarboximide) in the alpha form by reaction of perylene-3,4,9,10-tetracarboxylic dianhydride with 3,5-dimethylaniline in the presence of a secondary or tertiary amine as catalyse, which comprises effecting the reaction in an aqueous reaction medium and in the presence of added seed crystals of N,N'-di(3',5'-dimethylphenyl)perylenebis-(dicarboximide) at a temperature of from 120 to 190°C and a pressure of from 2 to 13 bar.

2. The process according to claim 1 wherein the aqueous reaction medium comprises essentially no further organic solvents.

3. The process according to claim 1 or 2 wherein the secondary or tertiary amine is selected from the group consisting of piperazine, N-(2-hydroxyethyl)piperazine, diethanolamine, N,N'-dimethylpiperazine, N-ethylpiperazine, N-methylcyclohexylamine, imidazole and N-methyimidazole.

4. The process according to any one of claims 1 to 3 wherein the added seed crystals come from one of the preceding charges.

5. The process according to any one of claims 1 to 4 wherein the aqueous reaction medium remaining after the reaction product has been filtered off is reused in the preparation of a subsequent charge.

6. The process according to any one of claims 1 to 5 wherein the reaction is effected at a temperature in the range from 130 to 170°C.

7. The process according to any one of claims 1 to 6 wherein 0.5 to 2.0 mol of a secondary or tertiary amine are used per mole of perylene-3,4,9,10-dicarboxylic dianhydride.

8. The process according to any one of claims 1 to 7 wherein 0% to 10% by weight of the 3,5-xylidine is replaced by one or more other primary amines.

9. The process according to any one of claims 1 to 8 wherein the N,N'-di(3',5'-dimethylphenyl)perylenebis(dicarboximide) is converted into particles having an average size < 0.2 µm by dry and/or wet grinding with or without subsequent recrystallization from a solvent.

## Revendications

1. Procédé pour la préparation de N,N'-di(3',5'-diméthylphényl)pérylènebis(dicarboximide) sous la forme alpha, par mise en réaction de dianhydride d'acide pérylène--3,4,9,10-tétracarboxylique avec de la 3,5-diméthylaniline en présence d'une amine secondaire ou tertiaire en tant que catalyseur, **caractérisé en ce que** la réaction est effectuée dans un milieu réactionnel aqueux et en présence de cristaux germes ajoutés de N,N'-di(3',5'-diméthylphényl)pérylène-bis(dicarboximide) à une température de 120 à 190 °C et sous une pression de 2 à 13 bars.

2. Procédé selon la revendication 1, **caractérisé en ce que** le milieu réactionnel aqueux ne contient pratiquement pas d'autres solvants organiques.

3. Procédé selon la revendication 1 ou 2, **caractérisé en ce que** l'amine secondaire ou tertiaire est choisie dans le groupe constitué par la pipérazine, la N-(2-hydroxyéthyl)pipérazine, la diéthanolamine, le N,N'-diméthyl-pipérazine, la N-éthylpipérazine, la N-méthylcyclohexylamine, l'imidazole et le N-méthylimidazole.

4. Procédé selon l'une quelconque des revendications 1 à 3, **caractérisé en ce que** les cristaux germes ajoutés proviennent d'une charge précédente.

5. Procédé selon l'une quelconque des revendications 1 à 4, **caractérisé en ce que** le milieu réactionnel aqueux restant après la séparation par filtration du produit de réaction est réutilisé dans la préparation d'une charge subséquente.

6. Procédé selon l'une quelconque des revendications 1 à 5, **caractérisé en ce que** la réaction est effectuée à une température dans la plage de 130 à 170 °C.

7. Procédé selon l'une quelconque des revendications 1 à 6, **caractérisé en ce que** par mole de dianhydride d'acide pérylène-3,4,9,10-tétracarboxylique on utilise de 0,5 à 2,0 moles d'une amine secondaire ou tertiaire.

8. Procédé selon l'une quelconque des revendications 1 à 7, **caractérisé en ce qu'** on remplace 0 à 10 % en poids de la 3,5-xylidine par une ou plusieurs autres amines primaires.

9. Procédé selon l'une quelconque des revendications 1 à 8, **caractérisé en ce qu'**on convertit le N,N'-di(3',5'-diméthylphényl)pérylène-bis(dicarboximide) par broyage à sec et/ou par voie humide, éventuellement avec recristallisation subséquente dans un solvant, en particules ayant une taille moyenne de particule < 0,2 µm.
